# EUROPEAN PATENT SPECIFICATION

(11) **EP 0 822 388 B1**
(45) Date of publication and mention of the grant of the patent: **22.01.2003**
(21) Application number: 97112327.8
(22) Date of filing: 18.07.1997
(51) Int. Cl.: G01B 11/04

(54) **Method for calibrating an apparatus to measure a moving film, and a device for executing the method**
Verfahren und Vorrichtung zum Kalibrieren eines Messapparats für bewegende Folien
Méthode et dispositif d'exécution pour calibrer un appareil de mesure pour une feuille mince en mouvement

(30) Priority: 29.07.1996 IT MI961610
(43) Date of publication of application: 04.02.1998
(73) Proprietor: ELECTRONIC SYSTEMS S.P.A., 28015 Momo (NO) (IT)
(72) Inventor: Masotti, Alessandro, 28040 Lesa No (IT)
(74) Representative: Savi, Alberto

(56) References cited:
- EP-A- 0 546 362
- EP-A- 0 607 938
- WO-A-91/15733
- US-A- 5 099 118

## Description

The object of this invention is a method for calibrating an apparatus to measure a material, such as a film or similar, moving relative to the same apparatus.

A further object of the invention is a device designed for executing the mentioned method.

A plant for producing filming materials is usually equipped with a plant control system, which serves the purposes of maintaining the produced film at a given qualitative standard.

The parameters to be controlled may typically include, for instance, the thickness, density, moisture content, etc.

In order to achieve a satisfactory plant control, and consequently a product of an adequate standard of quality, both the longitudinal and the transversal profile of the feature or parameter must be known with an adequate degree of approximation.

The measuring devices normally employed, which may, depending on the requirements, be for example of an optical, nuclear or magnetic nature, carry out the measurement on a processing area or "spot" of an essentially circular shape, occupying a surface of a few mm².

In order to obtain a proper estimate of the profile measured in both a transversal and longitudinal sense, a known technique recommends using a number of fixed measuring devices arranged cross-wise to the advancing direction of the film.

However, the apparatus thus described presents a number of shortcomings.

It is well known that the quality of a measuring device also depends on its stability, meaning the tendency to maintain the inlet/outlet data, determined during the calibration of the device itself, at an constant value for a certain period of time.

It is therefore necessary to proceed with recalibrating the measuring devices on a cyclical basis. This recalibration is carried out on one or more of the points of the measuring scale of each measuring device (using known procedures).

During the recalibration of the individual measuring devices, the measuring apparatus will therefore be in a partial or total out-of-service condition.

In order to control the working of the sensor, US-A-5.099.118 discloses a technique to continuously calibrate a first sensor by a second sensor of different nature. EP-A- 0.607.938 discloses a method to perform an absolute calibration of the sensor.

The recalibrating process may turn out to be of an unacceptable quality, and therefore have to be discarded. Alternatively, the film producing plant must be shut down.

At any rate, both of the mentioned choices involve a considerable impairment of the plant's true production capabilities.

Moreover, any recalibration of the film measuring apparatus adversely affects the handling costs of the plant itself.

In order to minimize the frequency of the recalibrating operations it is of course possible to resort to measuring devices of high quality, which are less affected by instability problems. On the other hand, the use of high quality measuring devices negatively affects the production cost of the control apparatus.

The primary purpose of this invention is to propose an enhanced calibrating method for an apparatus used to measure a moving film material, of a type including a number of separate measuring devices arranged cross-wise to the moving direction of the film material, as specified in Claim 1. The invention is further intended to cover a device for executing the mentioned method, as specified in Claim 4.

One way of executing this invention is described below, for purely orientative purposes and under reference to the enclosed drawings, in which:
- Fig. 1 outlines a measuring apparatus in a prospective view, equipped with a device for implementing the process described in the invention;
- Fig. 2 is a simplified view of the measuring apparatus in a first embodiment.
- Fig. 3 is a simplified view of the measuring apparatus in a second embodiment.
- Fig. 4 is a prospective view of a detail of the apparatus shown in Fig.2; and
- Fig. 5 is a prospective view of a detail of the apparatus shown in Fig. 3.

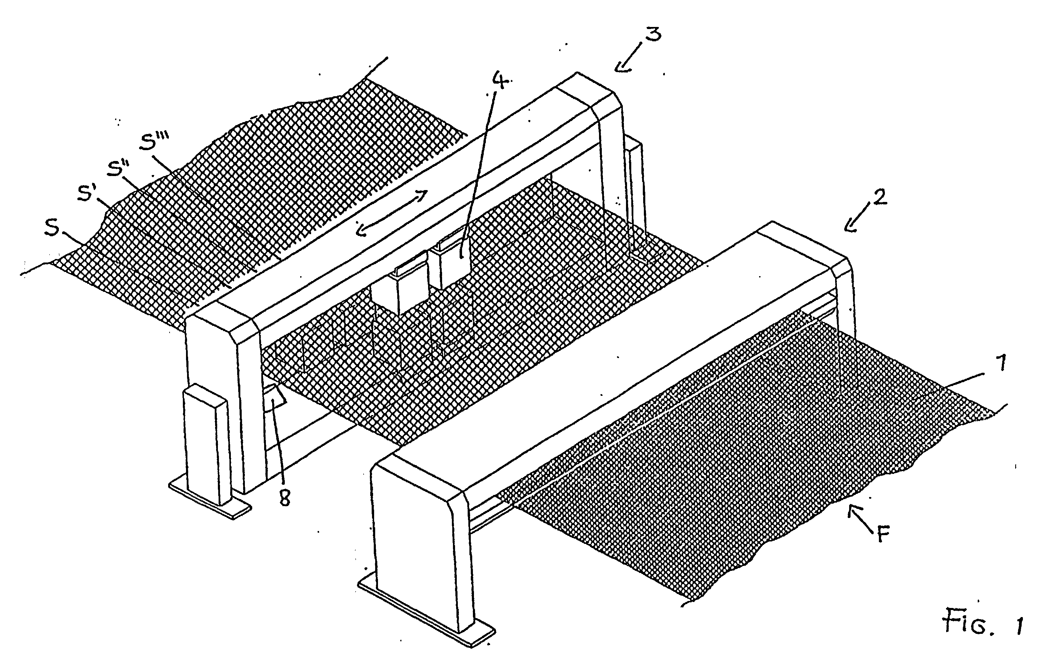

With reference to Fig.1, the number 1 indicates a film material moving in a direction F under a measuring apparatus 2.

The apparatus 2 includes a number of measuring devices, each of which being apt to read the thicknes of a stripe of film. After words the film moves through a second apparatus, identified as a group by the number 3, arranged cross-wise to the direction of motion of the film 1.

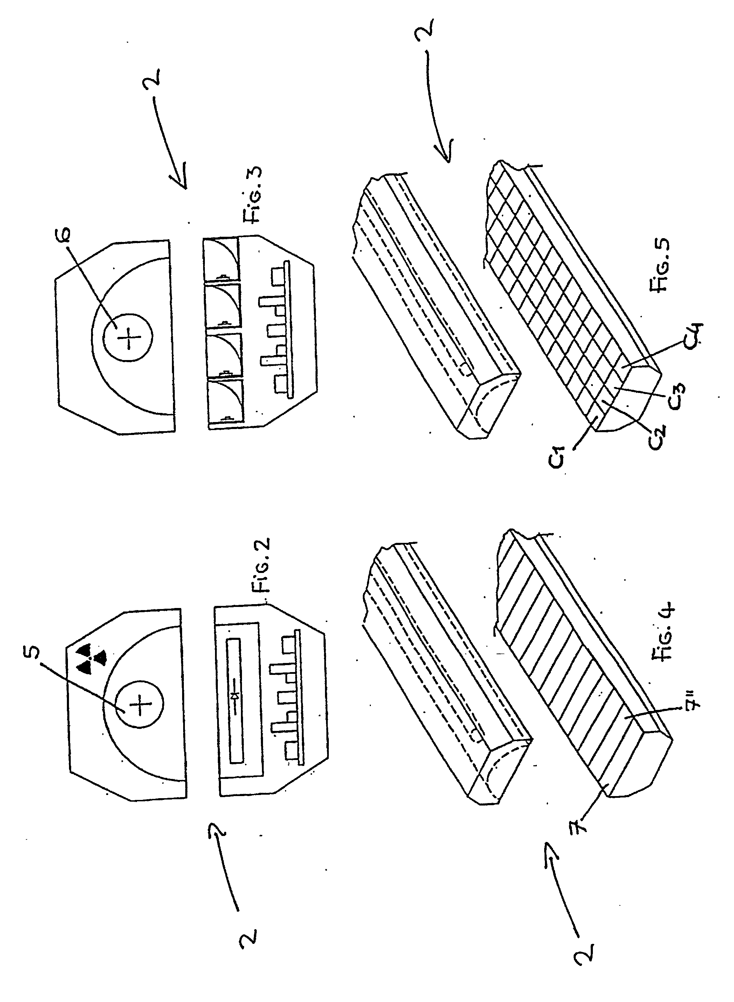

In one possible form of execution (Figures 2 and 4), the measuring apparatus 2 essentially comprises a radiating source 5 and a number of sensors 7', 7'', 7'''..., each of which acts on a longitudinal strip 5', 5'', 5'''... of the film 1.

In another form of execution (Figure 3 and 5), for instance typical for devices measuring infrared radiation, every strip 5', 5", 5''',... corresponds to a number of sensors C₁,C₂,C₃,... ... operating within separate frequency bands.

This allows carrying out precise measurements on a film composed of multiple coupled layers of different materials.

Every material in fact exhibits a distict absorption curve of its own, depending on the frequency of the infrared radiation involved.

By using several sensors it is therefore possible to measure the properties of each layer of the film material.

During the use of the apparatus 2, each measuring 7', 7'', 7''',... performs its measurement opposite the corresponding longitudinal strip of the film material in question.

A characteristic of the invention is in the fact that the calibration of the multiple number of the measuring devices 7', 7", 7''',... is effected by comparing the reading of each individual measuring device 7', 7", 7''',... on a predetermined section of the film 1, while carrying out the reading by a second set of measuring apparatus 3, on the same predetermined section, and consequently calibrating the individual measuring device.

The skilled reader of a section will quickly realize that the calibrating method described above has the great advantage of not interrupting the motion of the measuring apparatus, and thus of not interrupting the operation of the film production line.

In a preferred execution, the mentioned comparison between the individual measuring devices and the secondary means of measurement 3 is carried out in a sequence, while starting out from one side of the film and reaching the opposite side.

In order to carry out the method described above, it is also possible to resort to a scanning head 4 (for instance, the type described in EP-A-0.546.362 by the same applicant), which can be positioned across the lines of reading of the individual measuring devices 7, so as to take a reading (preceding or delayed) on the same predetermined section, and to certain means of numerical processing (not shown here), which are capable of comparing the signals generated by a single measuring device 7', 7'', 7''',... and by the scanning head 4 on the same section, and to effect an instant recalibration of each individual measuring device 7', 7'', 7''',... depending on the difference between the two readings.

The second means 3 may, if necessary, be recalibrated without affecting the operation of the apparatus 2.

For this purpose, depending on the type of execution described, a self-calibrating station 8 of a known type may be supplied to run the calibration of the scanning head 4.

## Claims

1. A calibrating method for an apparatus to measure a moving film (1), of a type including an apparatus (2) comprising a plurality of separate measuring devices (7', 7'', 7''', ... - C₁, C₂, C₃, ...) arranged transversely to the direction of motion F of the film (1) and comprising a secondary measuring means (3), **characterised in that** the following steps are carried out for each individual measuring device:
a) reading of a predetermined section of the moving film (1) by the individual measuring device (7', 7", 7''', ... - C₁, C₂, C₃, ...);
b) reading of the same predetermined section by the secondary measuring means (3);
c) comparing the data of the readings, and
d) calibrating the individual measuring device based on the results of said comparison.

2. A method based on claim 1, in which the phases a) and b) are inverted.

3. A method based on the claims 1 or 2, in which the individual measuring devices are calibrated in succession.

4. A calibrating device for an apparatus (2) for measuring a moving film (1), of the type including a plurality of separate measuring devices (7', 7", 7''', ... - C₁, C₂, C₃, ...) arranged transversely to the direction of motion (F) of the film (1), **characterised in that** it additionally includes a scanning head (4) arranged to be placed across the same line of reading of each individual measuring device to be calibrated, and means for numerical processing for comparing the readings carried out by each individual measuring device 7', 7", 7'''... - C₁, C₂, C₃, .. and the scanning head (4) on the same section, and to effect the calibration of each individual measuring device (7', 7", 7''', ... - C₁, C₂, C₃, ...) depending on the difference between the two readings.

## Patentansprüche

1. Verfahren zum Kalibrieren für ein Gerät zum Messen eines sich bewegenden Films (1) mit einem Aufbau, der ein Gerät (2) enthält, das eine Vielzahl gesonderter Messvorrichtungen (7', 7", 7'", ... - C1, C1, C3, ...) aufweist, die quer zur Bewegungsrichtung F des Films (1) angeordnet sind und ein sekundäres Messmittel (3) aufweisen, **dadurch gekennzeichnet, dass** die folgenden Schritte für jede einzelne Messvorrichtung durchgeführt werden:
a) Lesen eines vorbestimmten Abschnitts des sich bewegenden Films (1) durch die einzelne Messvorrichtung (7', 7", 7"', ... - C1, C2, C3,...);
b) Lesen desselben vorbestimmten Abschnitts durch das sekundäre Messmittel (3);
c) Vergleichen der Daten der Ablesungen; und
d) Kalibrieren der einzelnen Messvorrichtung auf der Grundlage der Ergebnisse des Vergleichs.

2. Verfahren nach Anspruch 1, **dadurch gekennzeichnet, dass** die Schritte a) und b) umgekehrt werden.

3. Verfahren nach Anspruch 1 oder 2, **dadurch gekennzeichnet, dass** die einzelnen Messvorrichtungen der Reihe nach kalibriert werden.

4. Kalibriervorrichtung für ein Gerät (2) zum Messen eines sich bewegenden Films (1) mit einem Aufbau, der eine Vielzahl gesonderter Messvorrichtungen (7', 7", 7'", ... - C1, C2, C3,...) aufweist, die quer zur Bewegungsrichtung (F) des Films (1) angeordnet sind, **dadurch gekennzeichnet, dass** sie zusätzlich einen Abtastkopf (4) enthält, der so angeordnet ist, dass er quer über diesselbe Linie der Ablesung jeder zu kalibrierenden einzelnen Messvorrichtung plaziert wird, und Mittel für die numerische Verarbeitung enthält, um die Ablesungen zu vergleichen, die durch jede einzelne Messvorrichtung (7', 7", 7'", ... - C1, C2, C3, ...) und den Abtastkopf (4) an demselben Abschnitt durchgeführt werden, und um die Kalibrierung jeder einzelnen Messvorrichtung (7', 7", 7'", ... - C1, C2, C3, ...) in Abhängigkeit von der Differenz zwischen den beiden Ablesungen durchzuführen.

## Revendications

1. Procédé de calibrage pour un appareil de mesure d'un film en mouvement (1), du type comprenant un appareil (2) comprenant une pluralité de dispositifs séparés de mesure (7', 7", 7"',... - C1, C2, C3, ...) agencés transversalement à la direction de mouvement F du film (1) et comprenant des moyens secondaires de mesure (3), **caractérisé en ce que** les étapes suivantes sont mises en oeuvre pour chaque dispositif de mesure individuel :
a) lecture d'une section pré-déterminée du film en mouvement par le dispositif de mesure individuel (7', 7", 7"',... - C1, C2, C3, ...) ;
b) lecture de la même section prédéterminée par les moyens secondaires de mesure (3) ;
c) comparaison des données des lectures, et
d) calibrage du dispositif de mesure individuel sur la base des résultats de ladite comparaison.

2. Procédé selon la revendication 1, dans lequel les étapes a) et b) sont inversées.

3. Procédé selon l'une des revendications 1 et 2, dans lequel les dispositifs de mesure individuel sont calibrés en succession.

4. Dispositif de calibrage pour un appareil (2) de mesure d'un film en mouvement (1), du type comprenant une pluralité de dispositifs de mesure séparés (7', 7", 7"', ... - C1, C2, C3, ...) agencés transversalement par rapport à la direction de déplacement (F) du film (1), **caractérisé en ce qu'**il comprend en outre une tête de balayage (4) agencée pour être placée transversalement à la même ligne de lecture de chaque dispositif de mesure individuel à calibrer, et des moyens de traitement numérique pour comparer les lectures effectuées par chaque dispositif de mesure individuel (7', 7", 7"', ... - C1, C2, C3, ...) et par la tête de balayage (4) sur la même section, et pour effectuer le calibrage de chaque dispositif de mesure individuel (7', 7", 7"', ... - C1, C2, C3, ...) en fonction de la différence entre les deux lectures.
